# EUROPEAN PATENT APPLICATION

(11) **EP 3 495 117 A1**
(43) Date of publication of application: **12.06.2019**
(21) Application number: 17206272.1
(22) Date of filing: 08.12.2017
(51) Int. Cl.: B29C 64/393, B22F 3/105, B29C 64/153, B33Y 10/00, B33Y 30/00, B33Y 50/02

(54) **APPARATUS AND METHOD FOR ADDITIVELY MANUFACTURING OF THREE-DIMENSIONAL OBJECTS**

(71) Applicant: CL Schutzrechtsverwaltungs GmbH, 96215 Lichtenfels (DE)
(72) Inventor: Hunze, Stephan, 01796 Pirna (DE); Ebert, Marie-Christin, 96450 Coburg (DE); Bokkes, Tobias, 96253 Untersiemau (DE); Zeulner, Fabian, 96215 Lichtenfels (DE); Schumann, Philipp, 96274 Itzgrund - Schottenstein (DE); Klaußner, Tim, 96317 Kronach (DE)
(74) Representative: Hafner & Kohl

(57) **Abstract**

Apparatus (1) for additively manufacturing of three-dimensional objects (2) by means of successive layerwise selective irradiation (8) and consolidation of layers of a build material (3) which can be consolidated by means of an energy source, comprising a determination device (13) adapted to determine at least one parameter of radiation (8) emitted from a build plane (6), wherein an optical unit (19) is provided that is adapted to guide at least a part of the radiation (8) emitted from the build plane (6) to a determination unit (14, 15) of the determination device (13) and to reduce radiation (10) emitted from at least a central part of a consolidation zone (9) of the build plane (6) in the at least one guided part of the radiation (8).

## Description

The invention relates to an apparatus for additively manufacturing of three-dimensional objects by means of successive layerwise selective irradiation and consolidation of layers of a build material which can be consolidated by means of an energy source, comprising a determination device adapted to determine at least one parameter of radiation emitted from a build plane.

Such apparatuses are generally known from prior art in which build material is consolidated by an energy source, in particular an energy beam such as a laser beam or an electron beam. The energy beam is used to selectively irradiate build material arranged in a build plane, wherein the irradiated build material typically is heated up to a defined temperature, for example a sintering temperature or a melting temperature that may depend on at least one chemical and/or physical parameter of the build material used in the additive manufacturing process.

Further, it is known from prior art that radiation is emitted from the build plane, for example, a reflection of radiation at the build plane, in particular a reflection of an energy beam used to consolidate the build material. Additionally, radiation is emitted from the build plane due to the energy depleted in the build material, for example thermal radiation emitted from the build plane, because of the build material being heated up to a defined process temperature , such as a melting temperature or a sintering temperature. To gain information relating to the consolidation behavior of the build material in regions of the build plane that are directly irradiated, so-called consolidation zones, at least one parameter of the radiation emitted from the build plane is determined and evaluated.

Additionally, not only the radiation emitted from the consolidation zone (or multiple consolidation zones) is observed, but also radiation from zones adjacent to the consolidation zone that heat up due to the heat transfer from the consolidation zone into the so-called adjacent zones. The evaluation of parameters relating to the radiation emitted from the consolidation zone and the adjacent zones provides information about the process quality and/or the object quality, for example the temperatures of the consolidation zone in the at least one adjacent zone or temperature gradients between the consolidation zone and the at least one adjacent zone, for instance. The at least one parameter of the radiation emitted from the build plane can therefore, indicate properties of the manufacturing process and/or the object that is additively manufactured, such as mechanical strains in the object.

In determining the at least one parameter of radiation emitted from a consolidation zone and at least one adjacent zone the different intensities of radiation emitted from the consolidation zone and the at least one adjacent zone may cause difficulties as a corresponding detector used to determine the at least one parameter may be overmodulated with radiation from the consolidation zone while determining the at least one parameter relating to the at least one adjacent zone, as the signal received from the at least one adjacent zone is relatively low compared to the signal received from the at least one consolidation zone.

It is an object to provide an apparatus for additively manufacturing of three-dimensional objects, wherein the determination of at least one parameter of radiation emitted from the consolidation zone and at least one adjacent zone is improved, in particular the ratio between radiation emitted from the consolidation zone and from the at least one adjacent zone is improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that an optical unit is adapted to guide at least a part of the radiation emitted from the build plane to a determination unit of the determination device and to reduce radiation emitted from at least a central part of a consolidation zone of the build plane in the at least one guided part of the radiation. Thus, the optical unit is used to guide radiation that is emitted from the build plane to the determination device used to determine the at least one parameter of the radiation. Further, the optical unit is adapted to reduce radiation emitted from the central part of the consolidation zone contained in the radiation that is collected and guided towards the determination unit of the determination device. In reducing the radiation that is emitted from the central part of the consolidation zone, for example a part of the energy beam that is reflected, in particular at a (metal) build material surface arranged in the build plane, the at least one adjacent zone can be observed, i.e. the at least one parameter of the radiation emitted from the at least one adjacent zone can be determined. By reducing the radiation emitted from the central part of the consolidation zone it is further ensured that radiation, e.g. a ratio of radiation, emitted from at least one adjacent zone or from a peripheral zone of the consolidation zone is increased compared to the radiation, e.g. a ratio of radiation, emitted from the central part of the consolidation zone.

Again, the consolidation zone is defined as a zone of the build plane in which build material is directly irradiated to consolidate the build material, in particular in which zone build material is sintered or melted. The distribution of radiation emitted from the build plane, i.e. from the consolidation zone, is typically not uniform but varies with the position in the build plane. As a central part of the consolidation zone typically receives the highest amount of energy, the central part of the consolidation zone is heated to the highest temperature compared with the whole consolidation zone or the whole build plane, respectively. Thus, a zone adjacent to the consolidation zone or a peripheral zone of the consolidation zone will receive a comparatively lower amount of energy than the central part of the consolidation zone (in typical irradiation patterns). Additional to the reception of the lower amount of energy, the adjacent zone or the peripheral zone, respectively, are heated due to heat transfer.

It is also possible that dependent on the beam shape, the distribution in the spot of the energy beam is not uniform, such as in Gaussian modes. Such zones in which a nonuniform distribution of radiation emitted from the build plane, in particular from the consolidation zone, leads to a comparatively lower amount of radiation can also be understood as adjacent zones or peripheral zones in the scope of this application. Thus, the term "central part of the consolidation zone" refers to the part of the consolidation zone receiving a comparatively higher amount of energy than at least one adjacent zone. Regarding uniform intensity distributions, such as a top hat distribution, the central part may be deemed as the whole part of the consolidation zone receiving the uniform intensity, whereas adjacent zones or peripheral zones may at least partially surround the central part receiving a comparatively lower amount of energy.

According to a first embodiment of the apparatus, the radiation emitted from the central part of the consolidation zone is blanked. By blanking the radiation that is emitted from the central part of the consolidation zone, the optical unit may guide exclusively radiation emitted from the adjacent zones or the peripheral zones to the determination unit, wherein radiation from the central part is blanked out, e.g. absorbed. Thus, it is possible to separate radiation emitted from the adjacent zones or the peripheral zones from radiation that is emitted from the central part of the consolidation zone. In other words, by blanking out the radiation emitted from the central part, only (the ratio of) radiation emitted from adjacent zones or peripheral zones is guided to the corresponding determination unit of the determination device.

Thus, the corresponding radiation is isolated from the whole radiation emitted from the build plane and therefore, an isolated determination and evaluation or analysis of the radiation emitted from the adjacent zone is feasible. This allows for providing information regarding a cooling behavior and/or the temperature in the adjacent zones or the peripheral zones, respectively. Thus, information can be gained relating to properties, i.e. mechanical properties, of the additively built object in those zones which information can typically not be acquired as they are overlaid or overmodulated with the much stronger signal or the higher amount of radiation emitted from the central part.

The optical unit may comprise at least one first mirror and at least one second mirror, wherein the first mirror is arranged in a beam path of radiation emitted from the central part of the consolidation zone. The corresponding beam path extends from the central part of the consolidation zone to the determination unit, wherein the first mirror is arranged in that the radiation emitted from the central part is incident on the first mirror and is at least reduced via the optical unit. The optical unit therefore, comprises at least one first mirror and at least one second mirror to guide the radiation emitted from the adjacent zones or the peripheral zones, respectively, to the determination device. The first mirror is arranged in the beam path of the radiation that is emitted from the central part of the consolidation zone to blank or to reduce the radiation emitted from the central part of the consolidation zone.

The first mirror is therefore, not used to reflect radiation emitted from the central part of the consolidation zone but only to reduce (the ratio of) radiation emitted from the central part of the consolidation zone, in particular to blank out the radiation emitted from the central part of the consolidation zone. The first mirror may comprise two sides, wherein a first side faces the build plane and a second side faces the corresponding determination unit of the determination device (regarding the beam path). The first side of the mirror may be arranged in that radiation that is emitted from the central part of the consolidation zone is incident on the first side of the mirror, wherein the ratio of centrally emitted radiation is at least reduced, preferably blanked.

The first side of the first mirror therefore, may be opaque or transmissive (for the wavelength of radiation emitted from the central part) to a defined degree in that a reduction of radiation emitted from the central part of the consolidation zone is achieved. It is possible to have the first side of the first mirror absorb the radiation that is emitted from the central part of the consolidation zone, e.g. via a corresponding coating on the first side of the mirror. Again, the radiation emitted from the central part of the build plane may be absorbed to a defined degree, in particular more than 90% are absorbed, preferably the radiation from the central part is completely absorbed.

The second side of the first mirror that faces the determination device may be reflective to at least a defined degree, preferably above 95% of the radiation that is emitted from the adjacent zone or a peripheral zone, respectively. The terms "facing the determination device" and "facing the build plane" are, of course, formulated with respect to the beam path of the radiation emitted from the build plane. For example, radiation reflected at the second side of the first mirror that faces the determination device is guided towards the determination device, in particular to the corresponding determination unit of the determination device, e.g. a corresponding sensor.

The optical unit comprises at least two mirrors, wherein the first mirror is used to reduce or blank the radiation emitted from the central part of the consolidation zone, wherein radiation emitted from an adjacent zone or a peripheral zone of the consolidation zone, respectively, is incident on the second mirror. The at least one second mirror comprises a reflective side facing the build plane to ensure that radiation incident on the second mirror is reflected towards the second side of the first mirror. Thus, radiation emitted from an adjacent zone or a peripheral zone of the consolidation zone is incident on the reflective side of the second mirror and is reflected to the first mirror from which it is again reflected further towards the determination device (of course it is possible that the radiation is guided with at least one or more radiation guiding units in advance to and/or after the optical unit before it is incident on a determination unit of the determination device).

The curvature of the second side of the first mirror is adjusted in that radiation reflected at the second mirror and incident on the second side of the first mirror is guided towards the determination device, preferably collimated. The curvature of the first mirror, in particular the second side of the first mirror, may be convex, in particular spherical. Thus, with respect to the beam path, the first mirror is closer to the build plane as the second mirror, wherein the second mirror is positioned closer to the determination device as the first mirror. Radiation emitted from the at least one adjacent zone or the at least one peripheral zone can therefore, laterally pass the first mirror (blanking out radiation emitted from the central part) and be incident on the second mirror from which it is reflected to the second side of the first mirror and again reflected towards the determination device.

The second mirror may preferably be ring-shaped, wherein the ring-shape encloses an aperture. Thus, radiation incident on the second mirror is reflected at at least one part of the ring-shaped second mirror towards the second side of the first mirror. Radiation emitted from the second side of the first mirror will pass the aperture of the second mirror. In other words, the beam path of the radiation emitted from the central part of the consolidation zone is in line with the aperture of the second mirror but the radiation emitted from the central part of the consolidation zone is blanked or reduced via the first mirror that is also arranged in line with the aperture and the beam path of radiation emitted from the central part of the consolidation zone.

According to another embodiment of the apparatus, the second mirror may comprise a tapered cross-section. The tapered cross-section enables guiding the radiation towards the centrally arranged first mirror (with respect to the beam path of radiation emitted from the consolidation zone). In other words, radiation that laterally passes the first mirror and is incident on the second mirror will be reflected towards the second side of the first mirror, wherein the first mirror is in line with radiation emitted from central part of the consolidation zone.

To improve the guiding of the radiation incident on the second mirror the side of the second mirror facing the first mirror may be curved, in particular concave. The curvature of the side of the second mirror facing the first mirror, in particular facing the second side of the first mirror, may in particular depend on the curvature of the second side of the first mirror. Preferably, radiation that is emitted from the build plane and is guided (or propagates) towards the optical unit will be reflected at the side of the second mirror facing the second side of the first mirror and will again be reflected at the second side of the first mirror towards the determination device. The curvatures of both mirrors may be adjusted to each other in that the desired radiation pattern is achieved on the determination device.

Preferably, the optical unit is rotationally symmetric. The term "rotationally symmetric" refers to the ability of the optical unit to guide radiation emitted from the build plane to the determination device independent of the orientation about the optical axis (beam path of radiation emitted from the central part of the build plane). Thus, the rotation of the optical unit around the optical axis preferably does not influence or has no significant effect on the way the radiation emitted from different or the same positions of the build plane is guided by the optical unit.

According to another embodiment of the apparatus, a positioning unit may be provided that is adapted to selectively move the optical unit into the beam path and out of the beam path, in particular the first mirror of the optical unit. By having the positioning unit being adapted to selectively move the optical unit into and out of the beam path it is possible to measure or determine at least one parameter of the radiation emitted from the build plane with the optical unit in the beam path and without the optical unit in the beam path. Thus, the positioning unit allows for positioning the optical unit in a first position in which the optical unit is positioned in the beam path of the radiation emitted from the build plane, in particular the central part of the consolidation zone and a second position in which the optical unit is not in the beam path. By merely moving the first mirror it is also possible to isolate the central part of the radiation, as radiation emitted from the central part may pass the aperture of the second mirror, whereas radiation from the adjacent zones will be reflected at the second mirror.

In particular, a first measurement or parameter determination can be performed in which the optical unit is in the first position and a second measurement or parameter determination can be performed with the optical unit in the second position. Thus, a selective adjustment of the optical unit is possible to provide the possibility to determine the at least one parameter of the radiation emitted from the central part without a reduction of the ratio or with a reduction of the ratio (or blanking the central part or the adjacent part, respectively).

The determination device may further be adapted to combine at least one parameter determined with the optical unit in the first position, in which radiation emitted from the central part of the consolidation zone is reduced in the guided radiation via the optical unit and at least one parameter, in particular the same parameter, with the optical unit and the second position, in which radiation emitted from the central part of the consolidation zone is not reduced in the guided radiation via the optical unit. As described before, both measurements or the determinations of the at least one parameter with the optical unit in both positions can be combined to provide information of the central part of the consolidation zone and adjacent zones or peripheral zones, respectively. This allows for making a statement about the object and/or the process quality over the whole area in which build material is selectively irradiated to form the object. For example, information can be generated relating to the temperatures in the process and/or how defined areas or zones are tempered, in particular regarding the cooling behavior or temperature gradients or absolute temperatures, for instance.

According to another embodiment of the apparatus, the determination device comprises at least two determination units, wherein a beam splitting unit is adapted to split at least a part of the radiation emitted from the build plane into two radiation parts, wherein one radiation part is directed to a first determination unit and another radiation part is directed to the second determination unit, wherein the optical unit is arranged between the beam splitting unit and the first or the second determination unit. According to this embodiment it is possible to split the radiation that is emitted from the build plane into at least two radiation parts, wherein the two radiation parts are guided to different determination units, in particular to a first determination unit and a second determination unit.

The optical unit is arranged between the beam splitting unit and the first or the second determination unit. By doing so it is possible to have one radiation part that can be "filtered" via the optical unit, in that radiation emitted from the central part of the consolidation zone is reduced or blanked via the first mirror and, wherein the second radiation part or the other radiation part comprises all radiation parts that are emitted from the build plane (or the adjacent zones are blanked), in particular radiation emitted from the central part of the consolidation zone and from the at least one adjacent zone or peripheral zone, respectively.

The optical unit may further be movably arranged with respect to the build plane and/or the determination unit of the determination device of the apparatus. This allows for adjusting the distance between the build plane and the optical unit and/or the distance between the determination unit of the determination device and the optical unit along the beam path. Further, it is also possible to have the optical unit movably arranged in that the distance between the first mirror and the second mirror is adjustable. Thus, a working distance of the optical unit or the determination unit of the determination device, respectively, can be adjusted.

Besides, the invention relates to a determination device for an apparatus for additively manufacturing of three-dimensional objects by means of successive layerwise selective irradiation and consolidation of layers of a build material which can be consolidated by means of an energy source, in particular for an inventive apparatus, as described before, which determination device is adapted to determine at least one parameter of radiation emitted from a build plane, wherein an optical unit adapted to guide at least a part of the radiation emitted from the build plane to at least one determination unit of the determination device and to reduce radiation emitted from at least a central part of a consolidation zone of the build plane in the at least one guided part of the radiation. Thus, the optical unit can be assigned to the determination device, wherein the determination device and the optical unit may form a determination assembly.

Additionally, the invention relates to a method for operating at least one apparatus for additively manufacturing three-dimensional objects by means of successive layerwise selective irradiation and consolidation of layers of a build material which can be consolidated by means of an energy source, in particular an inventive apparatus, as described before, wherein at least one parameter of radiation emitted from a build plane is determined, wherein at least a part of the radiation emitted from the build plane is collected and radiation emitted from a central part of a consolidation zone is reduced in the at least one part of the radiation (8).

Self-evidently, all features, details and advantages described with respect to the inventive apparatus are fully transferable to the inventive determination device and the inventive method.

Exemplary embodiments of the invention are described with reference to the Fig. The Fig. are schematic diagrams, wherein
- Fig. 1: shows an inventive apparatus; and
- Fig. 2: shows an optical unit of the inventive apparatus from Fig. 1.

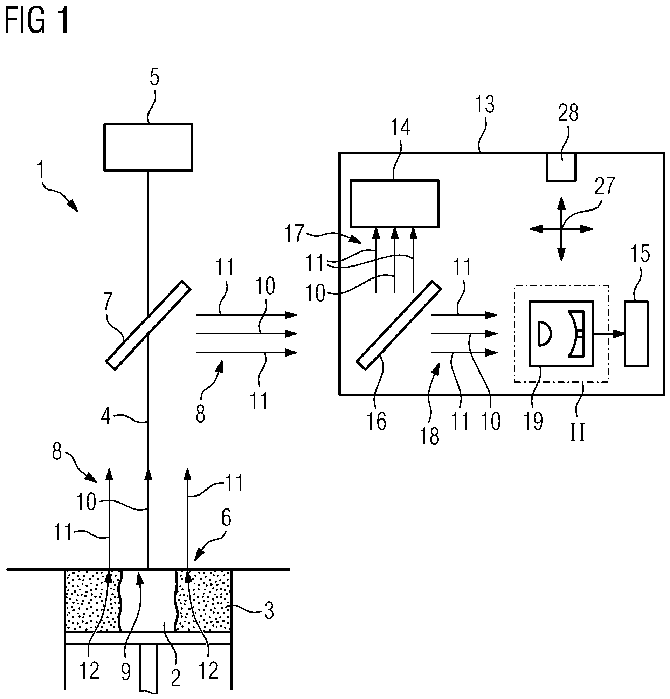

Fig. 1 shows an apparatus 1 for additively manufacturing of three-dimensional objects 2 by means of successive layerwise selective irradiation and consolidation of layers of a build material 3 which can be consolidated by means of an energy source, for example by irradiation via a laser beam 4. The laser beam 4 is generated by an irradiation device 5 and guided onto a build plane 6 in which the build material 3 is arranged, wherein the laser beam 4 can be guided over the build plane 6 to selectively irradiate build material 3 dependent on the cross-section of the object 2. The laser beam 4 passes a beam splitting unit 7, as will be described below.

As can further be derived from Fig. 1 radiation 8 is emitted from the build plane 6, for example thermal irradiation or radiation reflected at the build plane 6, for example at a surface of consolidated build material. The radiation 8 comprises (ratios of) radiation emitted from a consolidation zone 9, in particular radiation 10 emitted from a central part of the consolidation zone 9, and radiation 11 emitted from adjacent zones 12 or peripheral zones, respectively. The terms "adjacent zone" and "peripheral zone" are used synonymous in the following.

The radiation 8 is guided towards a determination device 13 comprising two determination units 14, 15 that are adapted to determine at least one parameter of the radiation 8 (or parts thereof) incident on the determination units 14, 15. A corresponding parameter may be a temperature of the consolidation zone 9 or adjacent zones 12, temperature gradients, the intensity of the radiation 8, the wavelength or the wavelength distribution or the like. To split the radiation 8, the determination device 13 comprises a second beam splitting unit 16 that is adapted to split the radiation 8 into a first radiation part 17 and a second radiation part 18, wherein the first radiation part 17 is guided towards the first determination unit 14 and the second radiation part 18 is guided towards the second determination unit 15. Both radiation parts 17, 18 comprise all parts of the radiation 8 that is emitted from the build plane 6.

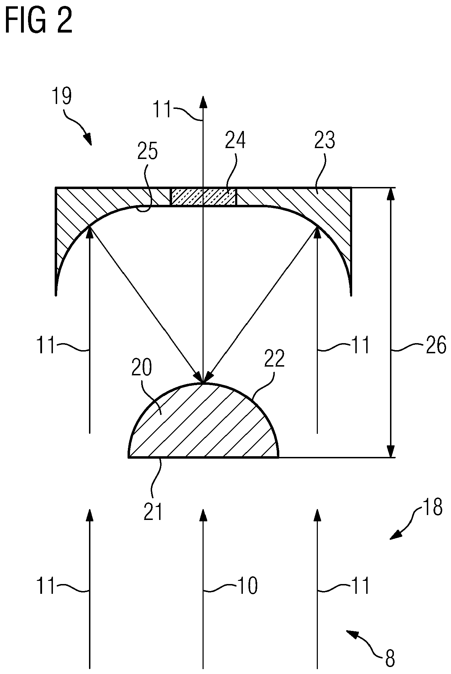

The second radiation part 18 that is guided towards the second determination unit 15 is incident on an optical unit 19. The optical unit 19 will be described with respect to Fig. 2 that shows a detail as indicated via the dotted circle in Fig. 1. Fig. 2 shows that the second radiation part 18 that is incident on the optical unit 19 comprises all parts of the radiation 8, in particular radiation 10 that is emitted from the central part of the consolidation zone 9 and radiation 11 that is emitted from the adjacent zones 12.

The optical unit 19 comprises a first mirror 20 that comprises a first side 21 facing the build plane 6 and a second side 22 facing the determination device 13, in particular the determination unit 15 of the determination device 13. The first side 21 of the first mirror 20 is not reflective but is coated with an anti-reflection coating that is adapted to absorb the radiation 10 that is emitted from the central part of the consolidation zone 9. In other words, the first mirror 20 is opaque for the radiation 10 emitted from the central part of the consolidation zone 9 and is used to blank out the radiation 10 emitted from the central part of the consolidation zone 9. The second side 22 of the first mirror 20 is reflective for the radiation 11 emitted from the adjacent zones 12, as will be described below.

The optical unit 19 further comprises a second mirror 23. The second mirror 23 is ring-shaped, wherein the ring shape of the second mirror 23 encloses an aperture 24. The second mirror 23 comprises a side 25 facing the first mirror 20, wherein the side 25 is reflective for the radiation 11 emitted from the adjacent zones 12 of the consolidation zone 9. The optical unit 19 is rotational symmetric, as can be derived from Fig. 2.

Radiation 8 that is incident on the optical unit 19 is therefore, "filtered" by the optical unit 19, as radiation 10 emitted from the central part of the consolidation zone 9 is incident on the first mirror 20 and is blanked out. Radiation 11 that is emitted from adjacent zones 12 of the consolidation zone 9 laterally passes the first mirror 20 and is incident on the second mirror 23. Radiation 11 incident on the second mirror 23 is reflected at the reflective side 25 of the second mirror 23 and guided towards the second side 22 of the first mirror 20 from which it is again reflected and guided through the aperture 24 and towards or onto the second determination unit 15 of the determination device 13.

Thus, the (ratio of) radiation 10 in the radiation 8 is filtered or separated from the (ratio of) radiation 11 also contained in the radiation 8 that is emitted from the build plane 6, in particular from the consolidation zone 9. Of course, it is also possible to have the first mirror 20 being transmissive to a defined degree in that radiation 10 can pass the mirror 20, wherein the radiation 10 transmitted through the first mirror 20 may be weakened or damped to a defined degree.

The curvatures of the second side 22 of the first mirror 20 and the side 25 of the second mirror 23 are adjusted or chosen in that radiation 11 reflected via the side 25 of the second mirror 23 and the second side 22 of the first mirror 20 is guided through the aperture 24 towards the second determination unit 15 of the determination device 13. Of course, dependent on the dimensions and the individual set-up of the determination device 13, in particular the optical unit 19, the curvature can be adapted as needed. According to this example, the curvature of the second side 22 of the first mirror 20 is convex and the curvature of the side 25 of the second mirror 23 is concave.

As indicated with arrow 26, the position of the first mirror 20 and the second mirror 23 or a distance between the first mirror 20 and the second mirror 23 can be adjusted in that the first mirror 20 and the second mirror 23 can be moved relative to each other. In particular, a distance between the first mirror 20 and the second mirror 23 can be adjusted to adjust or control the working distance of the optical unit 19.

As further indicated via arrows 27 (Fig. 1), the optical unit 19 is movably arranged in the apparatus 1 via a positioning unit 28. In particular, the optical unit 19 may be moved along the optical axis (of the radiation 8 emitted from the build plane 6) or out of the beam path or the optical axis, respectively (for example via a movement perpendicular to the optical axis). The movement of the optical unit 19 out of the beam path of the radiation 8, in particular out of the beam path of the second radiation part 18 allows for the determination unit 15 to determine the at least one parameter of the second radiation part 18 with the optical unit 19 in the beam path and without the optical unit 19 in the beam path.

Therefore, in a first position, in which the optical unit 19 is arranged in the beam path, the radiation 10 emitted from the central part of the consolidation zone 9 is "filtered" via the optical unit 19, as depicted in Fig. 1, Fig. 2. Additionally, it is possible to position the optical unit 19 in a second position in which the optical unit 19 is not arranged in the beam path. Thus, with the optical unit 19 in the second position, the determination unit 15 receives the radiation 8 with all components, in particular the radiation 10, 11.

Further, it is possible to use the first determination unit 14 which receives the radiation 8 with all components, in particular with the radiation 10, 11. The determination device 13 is therefore, adapted to combine the determination of the at least one parameter (in particular the same or other parameters) of the radiation 8 "filtered" with the optical unit 19 in the first position, as determined via the second determination unit 15 or "unfiltered" as determined via the first determination unit 14.

Of course, the inventive method can be performed on the inventive apparatus 1.

## Claims

1. Apparatus (1) for additively manufacturing of three-dimensional objects (2) by means of successive layerwise selective irradiation (8) and consolidation of layers of a build material (3) which can be consolidated by means of an energy source, comprising a determination device (13) adapted to determine at least one parameter of radiation (8) emitted from a build plane (6), **characterized by** an optical unit (19) adapted to guide at least a part of the radiation (8) emitted from the build plane (6) to a determination unit (14, 15) of the determination device (13) and to reduce radiation (10) emitted from at least a central part of a consolidation zone (9) of the build plane (6) in the at least one guided part of the radiation (8).

2. Apparatus according to claim 1, **characterized in that** radiation (10) emitted from the central part of the consolidation zone (9) is blanked.

3. Apparatus according to claim 1 or 2, **characterized in that** the optical unit (19) comprises at least one first mirror (20) and at least one second mirror (23), wherein the first mirror (20) is arranged in a beam path of radiation (10) emitted from the central part of the consolidation zone (9).

4. Apparatus according to one of the preceding claims, **characterized in that** the first mirror (20) comprises a first side (21) facing the build plane (6) and a second side (22) facing the determination device (13), wherein the second side (22) is at least partially curved.

5. Apparatus according to claim 4, **characterized in that** a curvature of the first mirror (20) is convex, in particular spherical.

6. Apparatus according to one of the claims 3 to 5, **characterized in that** the second mirror (23) is ring-shaped, wherein the ring-shape encloses an aperture (24).

7. Apparatus according to one of the claims 3 to 6, **characterized in that** the second mirror (23) comprises a tapered cross section.

8. Apparatus according to one of the claims 3 to 7, **characterized in that** the side (25) of the second mirror (23) facing the first mirror (20) is curved, in particular concave.

9. Apparatus according to one of the preceding claims, **characterized in that** the optical unit (19) is rotationally symmetric.

10. Apparatus according to one of the preceding claims, **characterized by** a positioning unit (28) adapted to selectively move the optical unit (19) into the beam path, in particular the first mirror (20).

11. Apparatus according to one of the preceding claims, **characterized in that** the determination device (13) is adapted to combine at least one parameter determined with the optical unit (19) in a first position, in which radiation (10) emitted from the central part of the consolidation zone (9) in the at least one guided part of the radiation (8) is reduced via the optical unit (19) and at least one parameter, in particular the same parameter, with the optical unit (19) in a second position, in which radiation (10) emitted from the central part of the consolidation zone (9) in the at least one guided part of the radiation (8) is not reduced via the optical unit (19).

12. Apparatus according to claim 11, **characterized in that** the determination device (13) comprises at least two determination units (14,15), wherein a beam splitting unit (16) is adapted to split at least a part of radiation (8) emitted from the build plane (6) into two radiation parts (17, 18), wherein one radiation part (17) is directed to a first determination unit (14) and another radiation part (18) is directed to the second determination unit (15), wherein the optical unit (19) is arranged between the beam splitting unit (16) and the first or the second determination unit (14, 15).

13. Apparatus according to one of the preceding claims, **characterized in that** the optical unit (19) is moveably arranged with respect to the build plane (6) and/or the determination device (13) of the apparatus (1).

14. Determination device (13) for an apparatus (1) for additively manufacturing of three-dimensional objects (2) by means of successive layerwise selective irradiation and consolidation of layers of a build material (3) which can be consolidated by means of an energy source, in particular an apparatus (1) according to one of the preceding claims, which determination device (13) is adapted to determine at least one parameter of radiation (8) emitted from a build plane (6), **characterized by** an optical unit (19) adapted to guide at least a part of the radiation (8) emitted from the build plane (6) to at least one determination unit (14, 15) of the determination device (13) and to reduce radiation (10) emitted from at least a central part of a consolidation zone (9) of the build plane (6) in the at least one guided part of the radiation (8).

15. Method for operating at least one apparatus (1) for additively manufacturing three-dimensional objects (2) by means of successive layerwise selective irradiation and consolidation of layers of a build material (3) which can be consolidated by means of an energy source, in particular an apparatus (1) according to one of the claims 1 to 13, wherein at least one parameter of radiation (8) emitted from a build plane (6) is determined, **characterized in that** at least a part of the radiation (8) emitted from the build plane (6) is collected and radiation (10) emitted from a central part of a consolidation zone (9) is reduced in the at least one collected part of the radiation (8).
